# EUROPEAN PATENT SPECIFICATION

(11) **EP 0 240 237 B1**
(45) Date of publication and mention of the grant of the patent: **26.05.1993**
(21) Application number: 87302591.0
(22) Date of filing: 25.03.1987
(51) Int. Cl.: G11B 17/028

(54) **Disc clamping device**
Plattenklemmvorrichtung
Dispositif de serrage de disque

(30) Priority: 25.03.1986 JP 67640/86
(43) Date of publication of application: 07.10.1987
(73) Proprietor: SHARP KABUSHIKI KAISHA, Osaka 545 (JP)
(72) Inventor: Junichi, Washo, Ikoma-shi Nara-ken (JP); Shigeo, Terashima, Tenri-shi Nara-ken (JP); Toshihisa, Deguchi Daiya-haitsu Gakuenmae C-722, Nara-shi Nara-ken (JP); Masahiro, Horii, Shiki-gun Nara-ken (JP); Takao, Hyuga, Souraku-gun Kyoto-fu (JP); Kenji, Ohta, Kitakatsuragi-gun Nara-ken (JP)
(74) Representative: Brown, Kenneth Richard

(56) References cited:
- EP-A- 0 099 005
- EP-A- 0 133 312
- FR-A- 2 304 136
- GB-A- 2 088 113
- PATENT ABSTRACTS OF JAPAN, vol. 9, no. 122 (P-359)[1845], 28th May 1985; & JP-A-60 7642
- PATENT ABSTRACTS OF JAPAN, vol. 9, no. 285 (P-204)[2008], 12th November 1985; & JP-A-60 124 057

## Description

### Background of the Invention

The present invention relates to a disc clamping device for engaging an information recording disc such as an optical disc or an optical magnetic disc coaxially with a turntable.

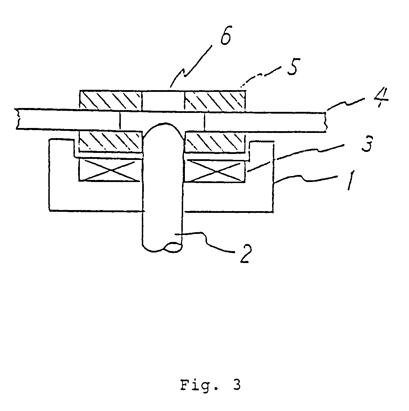

One conventional disc clamping device is shown in Fig. 3. Here, a turntable 1 has a spindle 2, and a magnet 3 is embedded in the turntable. An information recording disc 4, includes a ferromagnetic centering hub 5 with a center hole 6.

The turntable 1, integrally fixed to the spindle 2 is designed to rotate the information recording disc 4. The centering hub 5 is fixed on the disc 4 by bonding. The center hole 6 of the centering hub 5 has a diameter that fits on the spindle 2 with a specified clearance.

The sequence of fixing the information recording disc 4 on the above conventional disc clamping device is as follows. The spindle 2 is inserted into the center hole 6 of the centering hub 5 for centering the disc 4. Then, the magnet 3 attracts the ferromagnetic centering hub 5 thereby fixing the disc 4 on the turntable 1.

The above conventional device has the following problems. The spindle 2 is required to have such an accurate diameter as fits in the centre hole 6 of the centering hub 5 with the specified clearance. However, the centering hub hole can differ in diameter from disc to disc. Some discs may have too small a centering hub hole for the spindle to fit in, and some may have too large a centering hub hole to properly centre the discs, resulting in the centre displacement so that the recording/reading head cannot trace the tracks.

The disc clamping device has another problem for an information recording disc that has no centre hole because of a manufacturing process-related reason. Supposing the spindle is inserted in the centering hub hole of such a disc, if the axial length of the spindle effective for engagement with the centering hub is greater than the thickness of the centering hub, the spindle end comes to the disc face, preventing the disc from being fixed in the device.

Japanese patent application serial no. JP-A-60 7642, published 16th January 1985, discloses a second type of disc clamping device. This device is intended to accommodate a disc of the type which has a centre hole but does not include a ferromagnetic centering hub. In order to allow for variation in the diameter of the centre hole, the disc is engaged by a member which has a frusto-conical outer surface. However, this device is unsuitable for clamping a disc of the type shown in Figure 3, i.e. having a centering hub 5.

### Summary of the Invention

It is an aim of the present invention to alleviate at least some of the aforementioned problems.

In accordance with the present invention, there is provided a disc clamping device capable of clamping a disc of a first or second kind, said disk of the second kind having a smaller diameter of its center hole than the disk of said first kind, the device comprising:
a rotatably mounted disc base (1) for supporting a disc;
a spindle (2) extending from the centre of said disc base and fixed thereto;
a disc holding member (7) spaced above said spindle (2);
pressing means (9) arranged to press said disc holding member (7) toward said disc base (1) to clamp a disc therebetween;
said disc holding member (7) comprising a first portion having a circumferentially-tapered outer surface for engagement of the center hole of a disc of the first kind, a second portion for pressing engagement of the hub of a disc of the second kind, and a centre hole (8) for receiving said spindle (2) when a disc of the first kind is clamped; characterized by
said disc base (1) including magnetic means (3) positioned around said spindle (2) for magnetic interaction with the hub of a disc according to the second kind having a ferromagnetic centering hub.

### Brief Description of the Drawings

The present invention will become more fully understood from the detailed description given hereinbelow and the accompanying drawings which are given by way of illustration only, and thus are not limitative of the present invention and wherein:
Figs. 1 and 2 are side sectional views of an embodiment of a disc clamping device of the present invention; and
Fig. 3 is a side sectional view of the conventional disc clamping device.

### Detailed Description of the Invention

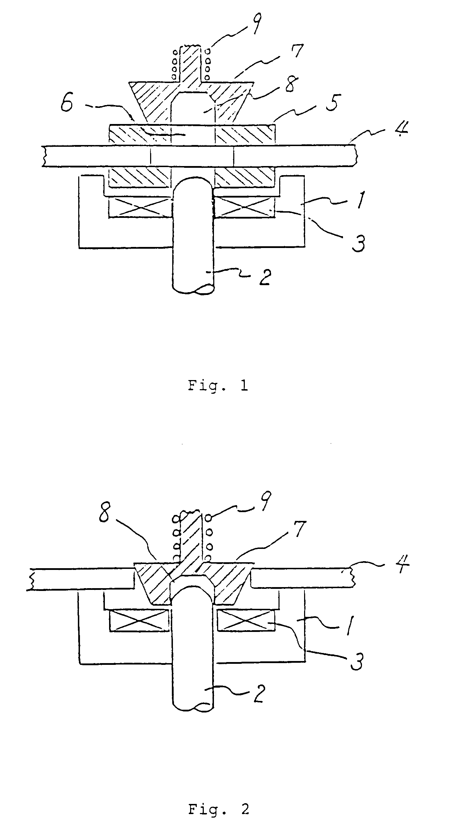

Fig. 1 is a side sectional view of an embodiment of the invention. The same reference numbers are allotted to parts identical with those of Fig. 3. Referring to Fig. 1, a turntable 1, has a spindle 2. A magnet 3 is embedded in the turntable 1. An information recording disc 4, has a centering hub 5 made of ferromagnetic substance bonded on the information recording disc 4, with a center hole 6. The center hole 6 has a diameter permitting the spindle 2 to be inserted and fixed therein. A disc holding member 7 includes a portion tapering downwardly and a center hole 8. The center hole 8 has a diameter which permits the spindle 2 to be inserted and fixed in the center hole 8. A compression spring 9 is provided for pressing the disc holding member downwardly.

The operation of the disc clamping device of the present invention is described in the following. The disc holding member 7 is lifted upwardly by a mechanism in the disc recorder/reader (not shown). The information recording disc 4 is inserted in the space between the disc holding member 7 and the turntable 1. The disc 4 is then set with the center hole 6 approximately over the spindle 2 by an initial positioning mechanism. The disc 4 lowers or the turntable 1 rises so that the spindle 2 is inserted into the center hole 6, thus centering the disc 4. Due to the attracting force between the ferromagnetic centering hub 5 and the magnet 3 embedded in the turntable 1, the disc 4 is securely fixed on the turntable 1.

The disc is clamped in the above operation when it has a centering hub. Some discs have no center hole for the purpose of simplifying the manufacturing process. To accommodate such discs, the spindle is designed so the spindle end inserted into the centering hub 5 does not come in contact with the disc 4. More specifically, the length effective for engagement of the spindle does not exceed the thickness of the centering hub 5, or alternatively the spindle may be axially slidable.

Fig. 2 explains the operation of the disc clamping device for an information recording disc with no centering hub. The disc 4 is placed around the center hole of the turntable 1 by the initial positioning mechanism. The disc holding member 7 is lowered in the axial direction, centering the disc 4. The disc holding member 7 is further lowered until the center hole 8 of the disc holding member 7 comes into engagement with the spindle 2, thereby centering the disc 4 accurately. Since the disc holding member 7 holds the disc 4 by the tapered circumferential wall of the conical section, it can hold a disc with various center hole diameters. The disc holding member 7 is pressed against the disc 4 due to the elasticity of the compression spring 9 provided in the upper part of the disc holding member 7. To increase the clamping force, the disc holding member 7 may be made of ferromagnetic material so that the magnet 3 in the turntable 1 and the disc holding member 7 attract each other.

As described above, the disc clamping device of the present invention comprises the disc base on which to set a disc and which has the spindle for rotating the disc, and the disc holding member which is movable in the axial direction of the spindle and which comprises the portion for pressing a disc with centering hub and the portion for engagement with the center hole of a disc with no centering hub. Accordingly, the disc clamping device of the present invention provides a substantial advantage that it can clamp a disc securely regardless of difference in the construction. Since the device is capable of clamping a disc with no center hole, it helps solve various problems in the disc manufacturing process; the disc with no center hole provides such merits as reduction in material processing cost, ease in forming recording layer and ease in transportation and handling.

## Claims

1. A disc clamping device capable of clamping a disc of a first or second kind, said disk of the second kind having a smaller diameter of its center hole than the disk of said first kind, the device comprising:
a rotatably mounted disc base (1) for supporting a disc;
a spindle (2) extending from the centre of said disc base and fixed thereto;
a disc holding member (7) spaced above said spindle (2);
pressing means (9) arranged to press said disc holding member (7) toward said disc base (1) to clamp a disc therebetween;
said disc holding member (7) comprising a first portion having a circumferentially-tapered outer surface for engagement of the center hole of a disc of the first kind, a second portion for pressing engagement of the hub of a disc of the second kind, and a centre hole (8) for receiving said spindle (2) when a disc of the first kind is clamped; characterized by
said disc base (1) including magnetic means (3) positioned around said spindle (2) for magnetic interaction with the hub of a disc according to the second kind having a ferromagnetic centering hub.

2. A disc clamping device according to claim 1, wherein the spindle (2) is arranged such that in operation it stops short of the plane in which the lower face of the disc lies when pressed on the disc base (1).

3. A device according to claim 2, wherein the spindle (2) is axially slidable with respect to said disc base (1).

4. A device according to claim 2, wherein the length of the spindle (2), for engagement of the centre hole (6) formed in the centering hub (5) of a disc does not exceed the thickness of the centre hub (5).

5. A device according to any one of the preceding claims, wherein the disc holding member (7) is made of ferromagnetic material.

## Patentansprüche

1. Plattenklemmvorrichtung zum Einspannen einer ersten und einer zweiten Plattenart, wobei die zweite Platte einen kleineren Zentralbohrungsdurchmesser als die erste Platte hat, mit:
einer drehbar angebrachten Plattenauflage (1) zur Aufnahme der Platte;
einer Spindel (2), die sich von der Mitte der Plattenauflage aus erstreckt und daran befestigt ist;
einer über der Spindel (2) beabstandet angebrachten Plattenhalterung (7);
einem Anpressmittel (9) zum Anpressen der Plattenhalterung (7) an die Plattenauflage (1), um eine Platte dazwischen einzuspannen;
wobei die Plattenhalterung (7) einen ersten Teil mit einer sich in Umfangsrichtung verjüngenden Außenfläche zur Aufnahme der Zentralbohrung der ersten Platte, einen zweiten Teil zum Anpressen der Nabe der zweiten Platte, und eine Zentralbohrung (8) zur Aufnahme der Spindel (2), wenn eine erste Platte eingespannt wird aufweist; **dadurch gekennzeichnet**,
daß die Plattenauflage (1) eine Magneteinrichtung (3) aufweist, die um die Spindel (2) angeordnet ist zur magnetischen Wechselwirkung mit der Nabe einer zweiten Platte mit einem ferromagnetischen Nabenmittelstück.

2. Plattenklemmvorrichtung nach Anspruch 1, wobei die Spindel (2) so angebracht ist, daß sie kurz vor der Ebene, in der die Unterseite der Platte liegt, wenn sie an die Plattenauflage gepreßt wird, aufhört.

3. Vorrichtung nach Anspruch 2, wobei die Spindel (2) zur Plattenauflage (1) achsial verschiebbar ist.

4. Vorrichtung nach Anspruch 2, wobei die Länge der Spindel (2) zur Aufnahme der Anbohrung (6), die im Nabenmittelstück (5) einer Platte geformt ist, die Dicke des Nabenmittelstückes (5) nicht überschreitet.

5. Vorrichtung nach einem der vorherigen Ansprüche, wobei die Plattenhalterung (7) aus ferromagnetischem Material besteht.

## Revendications

1. Dispositif de serrage de disque capable de serrer un disque d'un premier ou d'un second type, ledit disque du second type ayant un diamètre de trou central inférieur à celui du disque dudit premier type, le dispositif comportant:
une base (1) pour disque, montée avec liberté de rotation, pour supporter un disque;
une broche (2) qui s'étend depuis le centre de ladite base pour disque et qui lui est assujettie ;
un élément (7) de maintien du disque, espacé au-dessus de ladite broche (2);
des moyens de pressage (9) disposés pour presser ledit élément (7) de maintien du disque en direction de ladite base (1) pour disque pour serrer un disque entre eux;
ledit élément (7) de maintien du disque comportant une première portion présentant une surface extérieure en cône à base circulaire pour venir en prise avec le trou central d'un disque du premier type, une seconde portion pour venir en prise, par pressage, avec le moyeu d'un disque du second type, et un trou central (8) pour recevoir ladite broche (2) lorsqu'un disque du premier type est serré; dispositif caractérisé
par le fait que ladite base (1) pour disque comporte des moyens magnétiques (3) placés autour de ladite broche (2) pour interaction magnétique avec le moyeu d'un disque, conforme au second type, présentant un moyeu ferromagnétique de centrage.

2. Dispositif de serrage de disque selon la revendication 1, dans lequel la broche (2) est conçue de façon qu'en fonctionnement elle s'arrête peu avant le plan dans lequel se situe la face inférieure du disque lorsqu'il est pressé sur la base (1) pour disque.

3. Dispositif selon la revendication 2, dans lequel la broche (2) peut coulisser axialement par rapport à ladite base (1) pour disque.

4. Dispositif selon la revendication 2, dans lequel la longueur de la broche (2), prévue pour venir en prise avec le trou central (6) formé dans le moyeu de centrage (5) d'un disque, ne dépasse pas l'épaisseur du moyeu de centrage (5).

5. Dispositif selon l'une quelconque des revendications précédentes, dans lequel l'élément (7) de maintien du disque est fabriqué en un matériau ferromagnétique.
